# EUROPÄISCHE PATENTANMELDUNG

(11) **EP 2 369 263 A2**
(43) Veröffentlichungstag der Anmeldung: **28.09.2011**
(21) Anmeldenummer: 11155303.8
(22) Anmeldetag: 22.02.2011
(51) Int. Cl.: F24J 2/46, F24J 2/50

(54) **Aufnahmebehältnis und Verfahren zu seiner Herstellung**

(30) Priorität: 15.03.2010 DE 102010012002
(71) Anmelder: Dr. Doll Holding GmbH, 74193 Schwaigern (DE)
(72) Erfinder: Doll, Theo, Dr., 74193 Schwaigern (DE)
(74) Vertreter: Patentanwälte Ruff, Wilhelm, Beier, Dauster & Partner

(57) **Zusammenfassung**

Aufnahmebehältnis und Verfahren zu seiner Herstellung.

Ein Aufnahmebehältnis mit einem rahmen- oder wannenförmigen, tiefgezogenen Kunststoffgehäusekörper sowie mit einer Deckplatte, die abgedichtet auf einem gehäuseseitigen Auflagerand des Kunststoffgehäusekörpers aufliegt, ist bekannt.

Erfindungsgemäß, weist der Kunststoffgehäusekörper einen durch Warmumformung nach innen umgebogenen Randbereich auf, der drucklos einen Rand der Deckplatte auf einer zum Auflagerand gegenüberliegenden Seite der Deckplatte flankiert.

Einsatz für solarthermische Kollektoren.

## Beschreibung

Die Erfindung betrifft ein Aufnahmebehäitnis mit einem rahmen- oder wannenförmigen, tiefgezogenen Gehäusekörper aus Kunststoff sowie mit einer Deckplatte, die abgedichtet auf einem gehäuseseitigen Auflagerand des Gehäusekörpers aufliegt, sowie ein Verfahren zur Herstellung eines derartigen Aufnahmebehältnisses.

Derartige Aufnahmebehältnisse sind für solarthermische Kollektoren allgemein bekannt. Das Aufnahmebehältnis weist einen wannenförmigen Gehäusekörper auf, in dem ein Absorber und eine lsolationsschicht untergebracht sind. Eine transparente Deckplatte liegt auf einem oberen Auflagerand des Gehäusekörpers auf und ist mit Hilfe von Dichtstreifen sowie mittels aufgeschobener Aluminiumprofile klemmend und abgedichtet auf dem Gehäusekörper gehalten.

Aufgabe der Erfindung ist es, ein Aufnahmebehältnis der eingangs genannten Art und ein Verfahren zu seiner Herstellung zu schaffen, die eine besonders einfache und sichere Fixierung der Deckplatte zu erzielen.

Diese Aufgabe wird dadurch gelöst, dass der Kunststoffgehäusekörper einen durch Warmumformung nach innen umgebogenen Randbereich aufweist, der drucklos einen Rand der Deckplatte auf einer zum Auflagerand gegenüberliegenden Seite der Deckplatte flankiert. Die erfindungsgemäße Lösung geht von der Erkenntnis aus, dass es wie bei Metallblechmaterialien auch bei einem tiefgezogenen Kunststoffgehäusekörper möglich ist, einen oberen Randbereich umzubördeln, wenn man statt einer Kaltumformung eine Warmumformung einsetzt. Da durch die Warmumformung nach der Biegung eine Neuausrichtung der Mikrostruktur des Kunststoffes innerhalb des Randbereiches erzielt wird, ist der Randbereich in seiner nach innen umgebogenen Ausrichtung gleichbleibend stabil ausgerichtet, ohne dass ein großer Kraft- oder Druckaufwand aufgebracht werden muss, wie dies bei einer Kaltumformung von Metallblechen der Fall ist. Der nach innen auf die Deckplatte warmumgeformte Randbereich des Kunststoffgehäusekörpers hält die Deckplatte stabil gegen ihren Auflagerand am Kunststoffgehäusekörper, so dass der nach innen umgebogene Randbereich eine formschlüssige Sicherung und Fixierung der Deckplatte am Kunststoffgehäusekörper ergibt. Durch die erfindungsgemäße Lösung wird eine besonders einfache und wirksame Sicherung der Deckplatte auf dem Gehäusekörper erzielt. Der einstückig am Gehäusekörper angeformte Randbereich ist gemeinsam mit dem Gehäusekörper tiefziehbar. Zusätzliche Teile zur Sicherung der Deckplatte werden nicht benötigt.

In Ausgestaltung der Erfindung ist das Aufnahmebehältnis Teil eines solarthermischen Kollektors, bei dem ein Absorber und eine Wärmieisolationsanordnung in dem Aufnahmebehältnis untergebracht sind, und die Deckplatte ist transparent gestaltet. Die Ausgestaltung ermöglicht die einfache, kostengünstige und funktionssichere Herstellung eines solarthermischen Kollektors. Der rahmen- oder wannenförmige Kunststoffgehäusekörper dient dazu, den Absorber und die Wärmeisolationsanordnung, vorzugsweise in Form von Steinwolle, aufzunehmen.

Für das Verfahren zur Herstellung eines derartigen Aufnahmebehältnisses, wobei der Gehäusekörper durch ein- oder zweischaliges Tiefziehen unter Belassung eines überstehenden Randbereiches hergestellt und wobei eine Deckplatte auf einen Auflagerand des Gehäusekörpers aufgelegt und zu diesem Auflagerand abgedichtet wird, wird die der Erfindung zugrundeliegende Aufgabe dadurch gelöst, dass der überstehende Randbereich partiell, insbesondere linienförmig, auf eine Erweichungstemperatur des Kunststoffs erwärmt und nach innen derart auf die Deckplatte umgebogen wird, dass der Randbereich zumindest weitgehend drucklos einen Rand der Deckplatte flankiert, Unter dem Merkmal des weitgehend drucklosen Aufliegens ist zu verstehen, dass der Randbereich nach entsprechender Erweichung in die gewünschte Ausrichtung umgebogen wird, ohne zusätzlich einen Pressdruck auf die Deckplatte auszuüben, wie es beim Umbördeln eines Metallbleches der Fall wäre. Falls die Deckplatte auf dem Auflagerand des Kunststoffgehäusekörpers mittels eines elastischen Dichtmaterials aufliegt, wird dieses zwangsläufig durch die Umbiegung des Randbereiches und das nach Untendrücken der Deckplatte gespannt. Hierdurch entsteht zwangsläufig ein Gegendruck des elastischen Dichtmaterials gegen die formschlüssige Sicherung der Deckplatte durch den umgebogenen Randbereich. Bei nicht vorhandenem elastischen Dichtmaterial hingegen übt der umgebogene Randbereich keinen Druck auf die Deckplatte aus, sondern wird lediglich druck- oder kraftlos vorzugsweise rechtwinklig nach innen umgebogen, um die Deckplatte formschlüssig gegen ein Abheben zu sichern.

Die insbesondere linienförmige Erwärmung des Kunststoffgehäusekörpers in seinem Randbereich auf die entsprechende Erweichungstemperatur erfolgt vorzugsweise durch eine Heizdrahtanordnung oder eine ähnliche Heizeinrichtung, die eine punkt- oder linienförmige Erhitzung ermöglicht.

In Ausgestaltung des Verfahrens werden Eckabschnitte des Randbereiches durch spanende Bearbeitung herausgetrennt. Diese Ausgestaltung ist vorteilhaft, falls der Kunststoffgehäusekörper eine vorzugsweise viereckige Grundform aufweist. Das Heraustrennen der Eckabschnitte ermöglicht ein linienförmiges nach innen Schwenken der entsprechenden Seiten des Randbereiches.

In weiterer Ausgestaltung des Verfahrens werden Sollknickstellen für den Randbereich gebildet, um eine definierte und kraftarme Umbördelung des Randbereiches zu der Deckplatte hin zu bewirken. Derartige Sollknickstellen können durch Schaffung entsprechender Nuten am Randbereich vor dem Umbiegen des Randbereiches erzielt werden.

In weiterer Ausgestaltung der Erfindung wird als tiefziehfähiger Kunststoff ABS, PC, HDPE oder glasfaserverstärktes HDPE eingesetzt. Bevorzugte Plattenstärken der Kunststoffplatten vor dem Tiefziehen liegen im Bereich von 4 bis 6 mm.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in schematischer Schnittdarstellung einen Teil eines Kunststoffgehäusekörpers einer Ausführungsform eines erfindungsgemäßen Aufnahmebehältnisses für einen solarthermischen Kollektor,
- Fig. 2: den Kunststoffgehäusekörper nach Fig. 1 in einem weiteren Verfahrensschritt,
- Fig. 3: einen weiteren Verfahrensschritt zur Herstellung des solarthermischen Kollektors vor dem Aufbringen einer Glasplatte und
- Fig. 4: den letzten Verfahrensschritt zur Fertigstellung des solarthermischen Kollektors.

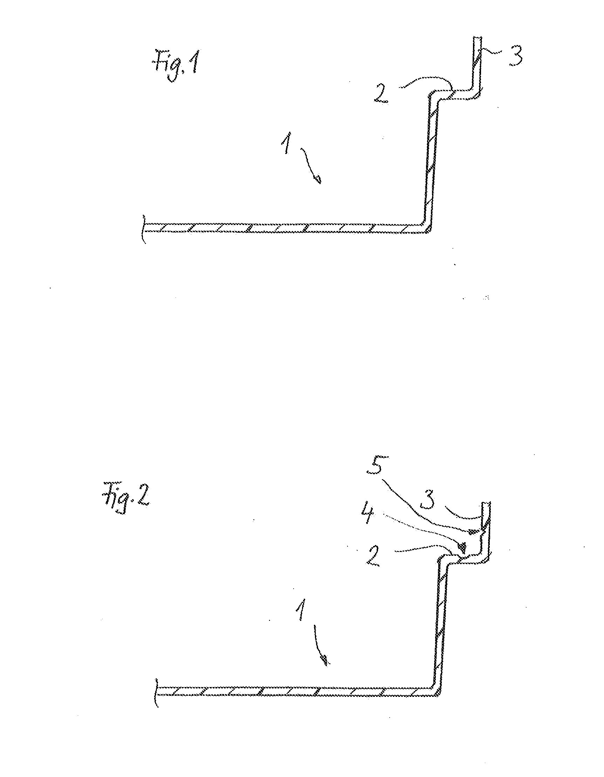

In den Fig. 1 bis 4 ist die Montage eines solarthermischen Kollektors in mehreren Verfahrensschritten dargestellt. Der solarthermische Kollektor weist einen tiefgezogenen, wannenförmigen Kunststoffgehäusekörper 1 auf, der aus Acrylnitril-Butadien-Styrol (ABS), aus Polycarbonat (PC), aus High Density Polyethylen (HDPE) oder aus glasfaserverstärktem HDPE besteht. Der Kunststoffgehäusekörper 1 wird einschalig aus einer vorzugsweise 4 mm bis 6 mm dicken Kunststoffplatte tiefgezogen. Der Kunststoffgehäusekörper 1 bildet einen umlaufenden, parallel zu einem Boden des Kunststoffgehäusekörpers 1 verlaufenden Auflagerand 2, von dem aus außenseitig ein Randbereich 3 etwa rechtwinklig nach oben abragt. Der Kunststoffgehäusekörper 1 dient zur Aufnahme einer Wärmeisolationsanordnung 9, die vorzugsweise aus einer Steinwolleschicht besteht, sowie zur Aufnahme eines darüberliegenden Absorbers 8. Sowohl die Wärmeisolationsanordnung 9 als auch der Absorber 8 werden beim dargestellten Ausführungsbeispiel von oben her in den wannenförmigen Kunststoffgehäusekörper 1 eingebracht.

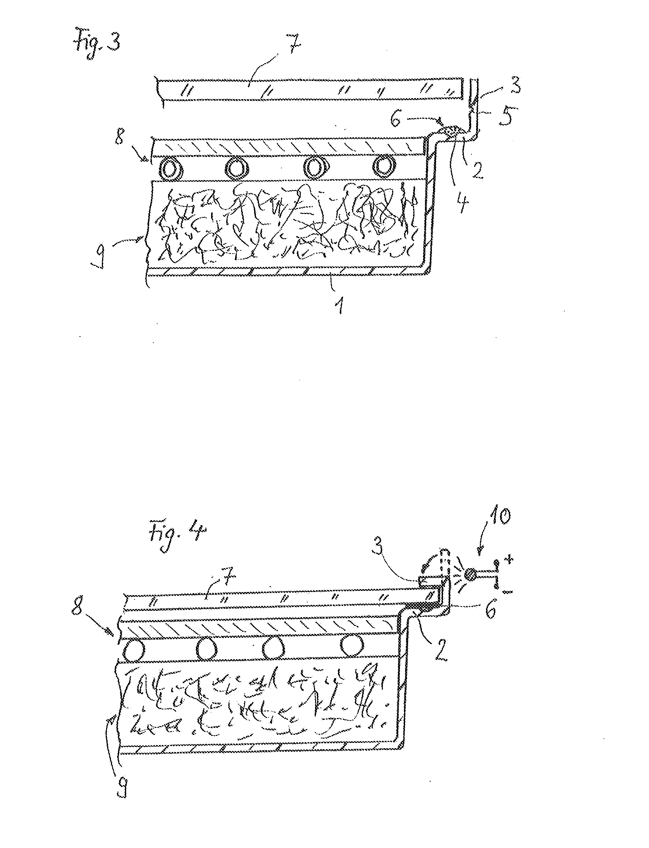

Als Deckplatte für den Kunststoffgehäusekörper 1 dient eine Glasplatte 7, die gemäß den Fig. 3 und 4 auf den Auflagerand 2 des Kunststoffgehäusekörpers 1 von oben her aufgelegt wird. Um das Eindringen von Feuchtigkeit in den zwischen der Glasplatte 7 und dem Gehäuseboden des Kunststoffgehäusekörpers 1 verbliebenen Hohlraum zu vermeiden, ist eine umlaufende Dichtungsanordnung im Bereich des Auflagerandes 2 vorgesehen. Bei dem in den Fig. 3 und 4 dargestellten Ausführungsbeispiel ist als Dichtungsanordnung 6 eine Dichtungsklebemasse 6 strangartig aufgetragen. Hierzu wird gemäß Fig. 2 nach dem Tiefziehen des Kunststoffgehäusekörpers 1 (Fig. 1) in den Auflagerand 2 von oben her eine Aufnahmenut 4 eingebracht, die für eine anschließend aufgebrachte Kleberaupe der Dichtungsklebemasse 6 einen gewissen Formschluss erzielt. Zudem wird in den etwa rechtwinklig zum Auflagerand 2 nach oben aufgerichteten Randbereich 3 von innen her eine Kerbnut 5 eingebracht, die als Sollknickstelle für den Randbereich 3 dient. Nach diesen Vorarbeiten werden die Wärmeisolationsanordnung 9 und der Absorber 8 eingelegt und in dem Kunststoffgehäusekörper 1 fixiert. Nun wird die Dichtungsklebemasse 6 umlaufend auf den Auflagerand 2 aufgebracht. Anschließend wird die Glasplatte 7 von oben her auf die umlaufende Dichtungsklebemasse aufgelegt. Das Gewicht der Glasplatte 7 presst die Dichtungsklebemasse 6 zusammen.

Statt einer Dichtungsklebemasse ist es auch möglich, den Randbereich der Glasplatte 7 mit einem doppelseitig klebenden Klebebandstreifen umlaufend zu versehen. Alternativ kann als Dichtungsanordnung ein E-lastomerhohlprofil wie insbesondere ein Gummiprofil umlaufend über die seitlichen Randkanten der Glasplatte 7 aufgeschoben werden.

In einem letzten Schritt wird schließlich der Randbereich 3 von außen her zumindest auf Höhe der Kerbnut 5 mittels einer vorzugsweise punkt-oder linienförmig wirksamen Heizeinrichtung auf die Erweichungstemperatur des Kunststoffes des Kunststoffgehäusekörpers 1 aufgeheizt. Als Heizeinrichtung ist bei der in Fig. 4 dargestellten Ausführungsform ein elektrischer Widerstandsheizdraht 10 schematisch dargestellt. Sobald der Randbereich 3 auf Erweichungstemperatur gebracht ist, wird der Randbereich 3 auf Höhe der Sollknicklinie, d.h. auf Höhe der Kerbnut 5 nach innen umgebogen. Wie anhand der Fig. 4 erkennbar ist, ergibt sich für den entsprechenden Randbereich 3 ein etwa rechtwinkliger Knickvorgang. Diese Umbiegung oder Umbördelung nach innen erfolgt durch ein geeignetes Werkzeug. Vorzugsweise wird der Randbereich 3 über eine gesamte Seitenlänge des Kunststoffgehäusekörpers 1 in einem einzelnen Biegegang scharnierartig um die durch die Kerbnut 5 gebildete Scharnierachse umgeknickt. Nach Wegnahme der Heizeinrichtung 10 kühlt der erwärmte Bereich des Randbereiches 3 ab, so dass der Randbereich 3 in seiner nach innen umgebördelten Ausrichtung fixiert bleibt. Der Randbereich 3 liegt flächig auf einer Oberseite der Glasplatte 7 auf und hält die Glasplatte 7 gegen den elastischen Druck der Dichtungsanordnung 6 formschlüssig und spielfrei auf dem Auflagerand 2 zurück. Gleichzeitig dient der Randbereich 3 auch zur Abschirmung der Kleberaupe gegen UV-Einstrahlung. Falls der Kunststoffgehäusekörper 1 eine viereckige Grundform aufweist, wird der Randbereich 3 vor dem Aufheizen und Umbördeln nach innen an seinem Eckabschnitt ausgeschnitten, um ein anschließendes Umbördeln der einzelnen Seiten des Randbereiches nach innen auf die Oberfläche der Glasplatte 7 zu vereinfachen. Beim Umbördeln des Randbereiches 3 muss kein Pressdruck von oben auf die Glasplatte 7 erzielt werden. Denn auch ohne großen Druck von oben behält der Randbereich 3 nach dem Erkalten seine nach innen umgebördelte Ausrichtung stabil bei. Eine Beschädigung der Glasplatte 7 beim Fixieren der Glasplatte 7 durch das Umbördeln des aus Kunststoff bestehenden Randbereiches 3 wird hierdurch wirkungsvoll vermieden.

## Patentansprüche

1. Aufnahmebehältnis mit einem rahmen- oder wannenförmigen, tiefgezogenen Gehäusekörper aus Kunststoff sowie mit einer Deckplatte, die abgedichtet auf einem gehäuseseitigen Auflagerand des Gehäusekörpers aufliegt, **dadurch gekennzeichnet, dass** der Kunststoffgehäusekörper (1) einen durch Warmumformung nach innen umgebogenen Randbereich (3) aufweist, der drucklos einen Rand der Deckplatte (7) auf einer zum Auflagerand (2) gegenüberliegenden Seite der Deckplatte (7) flankiert.

2. Aufnahmebehältnis nach Anspruch 1, **dadurch gekennzeichnet, dass** das Aufnahmebehältnis Teil eines solarthermischen Kollektors ist, bei dem ein Absorber (8) und eine Wärmeisolationsanordnung (9) in dem Aufnahmebehältnis untergebracht sind, und dass die Deckplatte (7) transparent gestaltet ist.

3. Verfahren zur Herstellung eines Aufnahmebehältnisses nach Anspruch 1, wobei der Gehäusekörper (1) durch ein- oder zweischaliges Tiefziehen unter Belassung eines überstehenden Randbereiches (3) hergestellt wird, wobei eine Deckplatte (7) auf einen Auflagerand (2) des Gehäusekörpers (1) aufgelegt und zu diesem Auflagerand (2) abgedichtet wird, **dadurch gekennzeichnet, dass** der überstehende Randbereich (13) partiell, insbesondere linienförmig, auf eine Erweichungstemperatur des Kunststoffes erwärmt und nach innen derart auf die Deckplatte (7) umgebogen wird, dass der Randbereich (3) zumindest weitgehend drucklos einen Rand der Deckplatte (7) flankiert.

4. Verfahren nach Anspruch 3, **dadurch gekennzeichnet, dass** Eckabschnitte des Randbereiches (3) durch spanende Bearbeitung herausgetrennt werden.

5. Verfahren nach Anspruch 3 oder 4, **dadurch gekennzeichnet, dass** Sollknickstellen (5) für den Randbereich (3) gebildet werden, um eine definierte und kraftarme Umbördelung des Randbereiches (3) zu der Deckplatte (7) hin zu bewirken.

6. Verfahren nach Anspruch 3, 4 oder 5, **dadurch gekennzeichnet, dass** als tiefziehfähiger Kunststoff ABS, PC, HDPE oder glasfaserverstärktes HDPE eingesetzt wird.
